# FASCICULE DE BREVET EUROPEEN

(11) **EP 0 951 180 B1**
(45) Date de publication et mention de la délivrance du brevet: **12.09.2001**
(21) Numéro de dépôt: 99470011.0
(22) Date de dépôt: 02.04.1999
(51) Int. Cl.: H04N 7/088

(54) **Procédé d'acquisition de données sur un signal vidéo.**
Verfahren zur Erfassung von Daten in einem Videosignal
Method for acquiring data in a video signal

(30) Priorité: 15.04.1998 FR 9804987
(43) Date de publication de la demande: 20.10.1999
(73) Titulaire: STMicroelectronics S.A., 94250 Gentilly (FR)
(72) Inventeur: Crespo, Thierry, 57000 Metz (FR); Perego, Alberto, 57000 Metz (FR)
(74) Mandataire: Ballot, Paul Denis Jacques

(56) Documents cités:
- EP-A- 0 591 880
- EP-A- 0 781 042
- US-A- 4 701 794
- FINK H: "MULTIPAGE-TELETEXT-DEKODER. TAUSEND VIDEOTEXT-SEITEN IM SPEICHER" FUNKSCHAU, vol. 64, no. 23, 30 octobre 1992 (1992-10-30), pages 110-115, XP000320820

## Description

L'invention concerne un procédé d'acquisition de données sur un signal vidéo. Plus particulièrement, l'invention réalise un procédé réalisant l'extraction, le traitement et l'affichage d'informations de type "télétexte".

Les signaux vidéo analogiques sont divisés en trames et en lignes. Chaque trame correspond à une image et chaque ligne à un balayage horizontal d'un écran de téléviseur. Classiquement, les trames comportent un nombre de lignes plus important que le nombre de lignes de l'écran (en SECAM, par exemple, seules 525 lignes sont utilisées pour une image écran sur 625 lignes transmises). Les lignes inutilisées pour la transmission d'image de télévision servent d'une part à la synchronisation et d'autre part à la transmission de données. Parmi les données transmises, on connaît les données se rapportant au télétexte.

Les données de télétexte sont placées en début de chaque trame, sur quelques lignes. Ces données sont structurées en pages numérotées. Chaque page, représente environ 1 ko de données en format texte. Pour la transmission, les pages sont découpées en plusieurs morceaux et codées. Malgré la compression des pages, une page est transmise en morceau sur plusieurs trames. En plus des données de page, des données supplémentaires de communication et de gestion sont transmises. Suivant différents standard, connus sous les noms de "basic", "FLOF" et "TOP" le traitement des données et la gestion des pages est plus ou moins important. La totalité des pages transmises étant couramment de quelques centaines de pages, la séquence complète de pages de télétexte peut être transmise en quelques minutes.

En "basic", les données de gestion se limitent aux numéros de chaque page, pour qu'un utilisateur puisse les adresser. En "FLOF", les données de gestion associées à chaque page sont le numéro de la page et d'autres numéros, correspondant à d'autres pages, qui constituent des liens pour permettre un changement de page plus rapide pour l'utilisateur. En "TOP", les données de gestion comportent le numéro de la page et des tables de liens à plusieurs niveaux formant une arborescence.

Les premiers téléviseurs équipés ne pouvaient fonctionner qu'en "basic" et ne pouvaient mémoriser que la page courante. Le télétexte était relativement lent pour l'utilisateur qui devait attendre le moment où la page souhaitée était transmise pour pouvoir la visualiser. Un première amélioration consista à munir les téléviseurs d'une mémoire (par exemple de 8 ko) pour mémoriser quelques pages. Le téléviseur mémorisant des pages successives à la page courante, l'utilisateur pouvait faire défiler les pages une par une sans avoir systématiquement à attendre la transmission de la page souhaitée (à condition de lire les pages de manière successive).

Le "FLOF" améliore le confort de l'utilisateur car il permet au téléviseur de mémoriser des pages suivantes et des pages correspondant à des liens. Ainsi une page de sommaire ou faisant référence à des pages distantes permet à l'utilisateur un changement de page non successive plus rapide. Un problème du "FLOF" est d'une part l'attente nécessaire lorsque l'utilisateur réalise deux sauts de page successifs rapidement et d'autre part le temps nécessaire pour revenir à une page de sommaire lors d'un mauvais choix si la page de sommaire a déjà été écrasée par une autre.

Le "TOP" permet de remédier à ces problèmes car les données de gestion comportent des arborescences ascendante et descendante. Le téléviseur peut alors mémoriser une ou deux pages qui font référence à la page courante, quelques pages suivantes et les pages auxquelles la page courante fait référence. De plus, dès que l'on effectue un saut de page, les pages auxquelles fait référence la page courante sont déjà connues par le téléviseur, ce qui permet d'anticiper le chargement d'une nouvelle page.

La gestion du télétexte se fait actuellement dans les téléviseurs haut de gamme à l'aide de circuits spécialisés qui ne s'occupent que du télétexte comme l'illustre le document EP-A-0 591 880. Les circuits spécialisés sont de taille importante et donc de coût important. Pour intégrer la gestion du télétexte dans des téléviseurs bas de gamme, il est nécessaire de réduire le coût des composants dédiés au télétexte. Les téléviseurs actuels comportant tous des circuits de type micro-contrôleur utilisant au moins un processeur, l'homme du métier a eu l'idée d'intégrer sur le micro-contrôleur un circuit dédié à l'extraction des données se rapportant au télétexte à partir du signal vidéo.

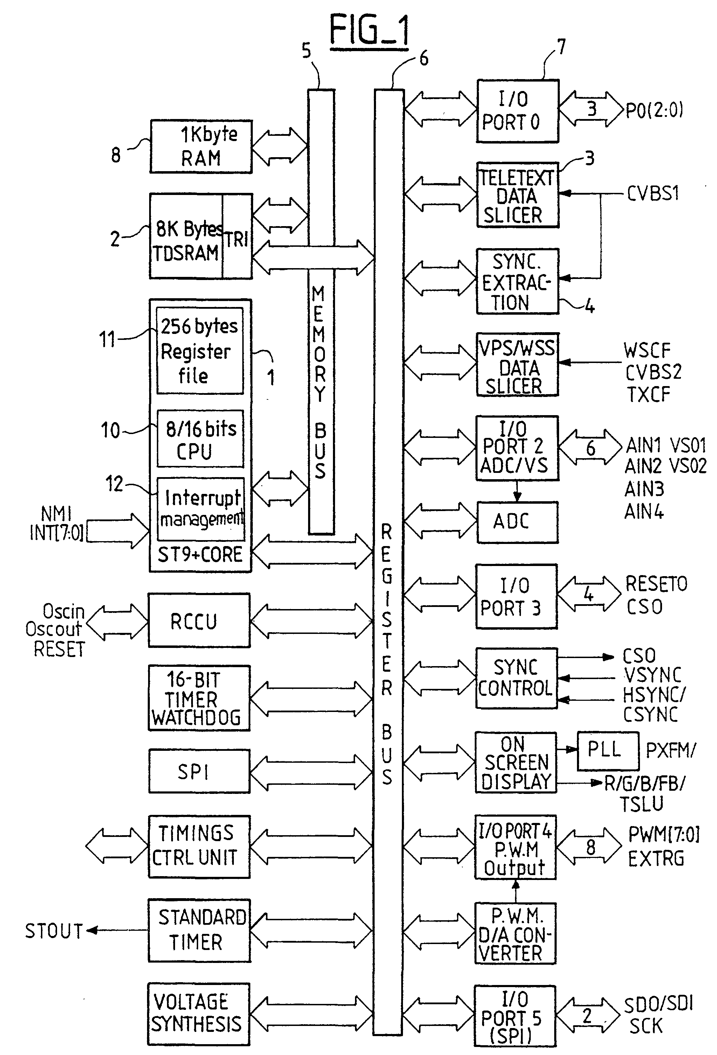

Pour diminuer la taille du micro-contrôleur résultant, on intègre seulement un circuit réalisant une extraction brute du signal vidéo. De tels micro-contrôleurs sont connus de l'homme du métier, la figure 1 représentant, à titre d'exemple indicatif, le schéma interne d'un circuit vendu par la société SGS-THOMSON MICROELECTRONICS sous la référence ST92R195 qui intègre un circuit d'extraction brute. Par extraction brute, il faut comprendre uniquement la démodulation des données et le stockage des données juste après démodulation. Pour plus de détails de fonctionnement de ce circuit ou de sa mise en oeuvre, l'homme du métier peut se reporter au manuel de ce circuit mis à la disposition du public par la société SGS-THOMSON MICROELECTRONICS depuis novembre 1997 sous le titre "ST92R195 8-bits MCU DATASHEET". L'homme du métier peut également se référer à la documentation d'autres circuits de la même famille référencés ST92195, ST92T195, et ST92E195.

Les micro-contrôleurs doivent alors gérer la totalité du système de télétexte en plus du fonctionnement global du téléviseur. Il peut paraître évident de programmer un processeur pour l'ensemble de ces tâches. Cependant, dans le domaine des téléviseurs, il est extrêmement coûteux d'utiliser des micro-contrôleurs fonctionnant à une fréquence d'horloge élevée car une fréquence d'horloge élevée crée une source de bruit supplémentaire que l'on ne désire pas avoir. Un problème survient alors pour effectuer à la fois la gestion du téléviseur et la gestion du système de télétexte avec un même processeur qui est limité en vitesse de traitement.

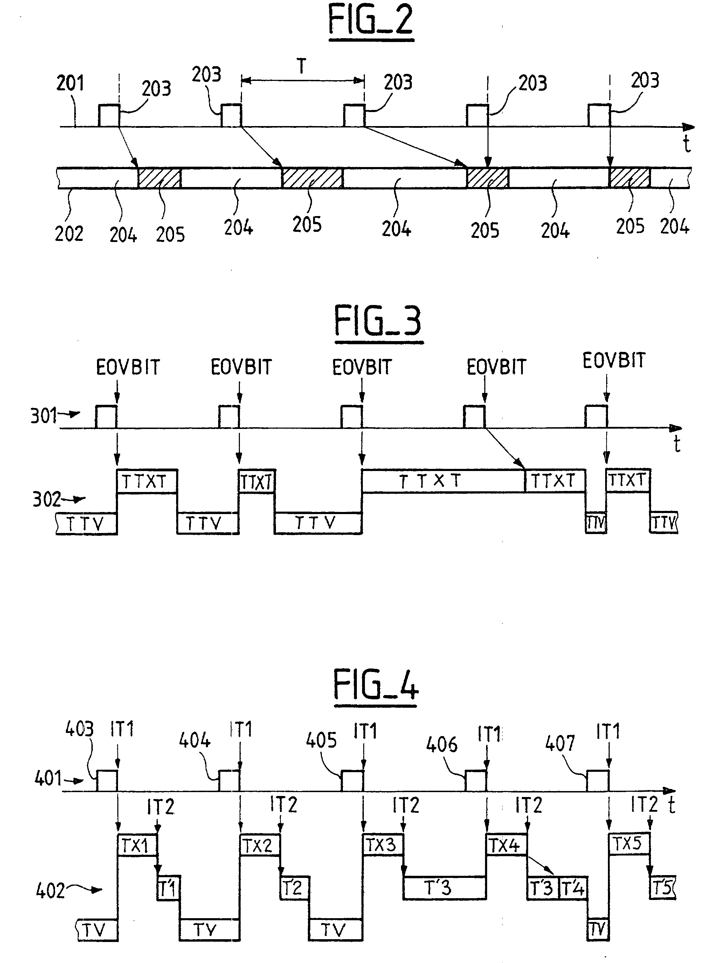

La figure 2 représente des chronogrammes d'une part de l'extraction brute 201 et d'autre part des tâches du processeur 202 dans un cas où l'on gère le télétexte au même niveau que la gestion du téléviseur. Sur le chronogramme d'extraction brute 201, on a représenté les moments d'extraction 203 qui sont cycliques de période T correspondant à la durée d'une trame (20 ms ou 16,6 ms suivant les pays). Le chronogramme des tâches 202 montre le partage temporel des différentes tâches traitées par le processeur du micro-contrôleur. Les différentes tâches sont ici séparées en deux types de tâches, les tâches liées à la gestion du téléviseur 204, et la gestion du télétexte 205. Or la gestion des différentes tâches 204 ainsi que la gestion du télétexte 205 sont de durées variables. De ce fait, il existe une dérive temporelle qui peut provoquer la perte d'informations. On peut voir sur la figure 1 un cas de perte où de nouvelles données extraites remplacent les données extraites précédemment pendant le traitement des données précédemment extraites. Ceci entraîne une perte de données qui nécessite l'attente de la répétition des données perdues lors de leur prochaine émission (quelques minutes plus tard).

Tout naturellement, l'homme du métier sait qu'il est possible d'utiliser une interruption qui correspond au début de l'image, c'est à dire à la fin de l'extraction brute des données. Un tel fonctionnement est représenté sur la figure 3.

La figure 3 représente des chronogrammes d'une part de l'extraction brute 301 et d'autre part des tâches du processeur 302. Sur le chronogramme d'extraction brute 301, on a représenté les moments d'extraction 303 qui sont cycliques de période T correspondant à la durée d'une trame (20 ms ou 16,6 ms suivant les pays). Le chronogramme des tâches 302 montre le partage temporel des différentes tâches traitées par le processeur du micro-contrôleur. Les différentes tâches sont séparées en deux types de tâches, les tâches liées à la gestion du téléviseur TTV, et à la gestion du télétexte TTXT. Chaque tâche de gestion du télétexte TTXT est déclenchée par une interruption de début d'image EOVBI IT (connue en anglais sous le nom de "End Of Vertical Blanking Interval interrupt").

Un problème peut se poser lorsque l'on fait du télétexte en mode "TOP". En effet, le traitement d'un paquet de données peut durer plus que l'intervalle de temps qui sépare deux paquets de données. L'interruption EOVBI IT est alors mise en attente et traitée après le traitement du paquet de données en cours de traitement. Une dérive temporelle peut se produire et causer une perte de données. Ceci est dû essentiellement au long traitement nécessaire à la gestion d'arborescence. Mais il est également possible que des programmes issus d'interruptions plus prioritaires que le télétexte ralentissent le traitement, ce qui peut également provoquer une perte d'information en "FLOF".

Un but de l'invention est de proposer un procédé de gestion du télétexte permettant de remédier aux problèmes évoqués précédemment. Dans l'invention, le traitement des données est séparé en au moins deux tâches, une première tâche s'occupant de traiter les données issues de l'extraction brute, une deuxième tâche réalisant le reste du traitement. La première tâche déclenche la deuxième tâche par une interruption logicielle de priorité inférieure à l'interruption de début d'image de telle sorte qu'une prochaine interruption de début d'image puisse interrompre la deuxième tâche pour réaliser une prochaine première tâche. Ainsi, avec l'invention, il n'y a plus de dérive temporelle risquant de perdre le paquet de données provenant de l'extraction brute.

L'invention a pour objet un procédé d'acquisition et d'affichage de données à partir d'un signal vidéo reçu par un téléviseur qui comporte un processeur, dans lequel: le processeur reçoit une première interruption lorsque les données ont été extraites du signal vidéo et mémorisées dans une mémoire tampon; la première interruption déclenche un premier traitement des données ayant pour objet de décoder, sélectionner et transférer lesdites données dans une mémoire utile; la fin du premier traitement produit une deuxième interruption de priorité inférieure à la première interruption, la deuxième interruption déclenchant un deuxième traitement ayant pour objet des opérations de télétexte basées sur lesdites données. Le deuxième traitement comprend notamment des opérations d'affichage de page et / ou des opérations de mise à jour des différentes tables de gestion du télétexte.

Plus généralement, l'invention concerne un procédé de gestion d'un téléviseur comportant un micro-contrôleur qui comporte un processeur et des périphériques relatifs au fonctionnement global du téléviseur, dans lequel le processeur réalise la gestion de tous les périphériques du téléviseur, et comportant le procédé d'acquisition et d'affichage de données à partir du signal vidéo reçu par le téléviseur.

L'invention sera mieux comprise et d'autres particularités et avantages apparaîtront à la lecture de la description qui va suivre, la description faisant référence aux dessins annexés parmi lesquels:
la figure 1 représente un micro-contrôleur selon l'état de la technique,
les figure 2 et 3 représentent des diagrammes temporels de gestion de tâches selon l'état de la technique,
la figure 4 représente un diagramme temporel de gestion de tâches selon l'invention.

Comme déjà dit précédemment, la figure 1 représente un micro-contrôleur pour téléviseur vendu par la société SGS-THOMSON MICROELECTRONICS sous la référence ST92R195. Ce micro-contrôleur n'est pas décrit entièrement, l'homme du métier pouvant consulter, pour plus de détails, la publication "ST92R195 8-bits MCU DATASHEET" incorporée par référence.

Le micro-contrôleur de la figure 1 comporte un coeur de processeur 1, une mémoire double port 2, un circuit d'extraction brute 3, un circuit d'extraction de synchronisation 4, des premier et deuxième bus 5 et 6 de communication, une mémoire de programme 8 et au moins un port de communication 7. Le coeur de processeur comprend un processeur 10, une banque de registre 11 et un circuit de gestion d'interruption 12.

Le coeur de processeur 1 et la mémoire double port 2 sont connectés tous deux aux premier et deuxième bus 5 et 6. Les premier et deuxième bus constituent chacun un bus complet incluant bus de données, d'adresses, et de commande. Le coeur de processeur 1 reçoit par ailleurs des fils d'interruptions NMI ET INT[7:0] provenant de périphériques extérieurs au micro-contrôleur. Le circuit d'extraction brute 3, le circuit d'extraction de synchronisation 4 et le port de communication 7 sont connectés tous trois au deuxième bus 6. La mémoire de programme 8 est connectée au premier bus.

Les circuits d'extraction brute 3 et d'extraction de synchronisation 4 reçoivent chacun un signal vidéo CVBS1 provenant: de l'extérieur du micro-contrôleur. Le port de communication 7 dispose d'au moins un fil de sortie pour envoyer un signal à l'extérieur du micro-contrôleur.

Lorsque le coeur de processeur 1 reçoit une interruption soit d'un des bus 5 ou 6, soit des fils d'interruption NMI ET INT[7:0], ou soit du processeur 10, le circuit de gestion d'interruption 12 vérifie que l'interruption reçue est d'un niveau de priorité supérieur ou inférieur au niveau de priorité de la tâche en cours de traitement dans le processeur. Si l'interruption est d'un niveau inférieur ou égal au niveau de la tâche en cours, le circuit de gestion d'interruption 12 met l'interruption en attente. Si par contre, l'interruption reçue est d'un niveau de priorité supérieur au niveau de la tâche en cours d'exécution, alors, le processeur 10 est arrêté, le contenu des registres internes du processeur 10 est stocké dans la banque de registre 11, et le processeur 10 va chercher un programme correspondant à l'interruption reçue.

Les interruptions peuvent provenir soit de l'un des périphériques internes ou externes du micro-contrôleur soit être une interruption logicielle créée par le déroulement d'un programme dans le processeur 10. Le circuit de gestion d'interruption 12 dispose d'une table lui permettant de déterminer les différentes priorités entre les interruptions et permettant d'associer une adresse de programme à chaque interruption.

Les interruptions sont utilisées dans un téléviseur pour de nombreux accessoires tels que télécommande, clavier, contrôle de la qualité du son et de l'image, etc... Une interruption de début d'image est également produite par le circuit d'extraction de synchronisation 4.

La figure 4 représente des chronogrammes d'une part de l'extraction brute 401 et d'autre part des tâches du processeur 402. Sur le chronogramme d'extraction brute 401, on a représenté les moments d'extraction 403 à 407 qui sont cycliques de période T correspondant à la durée d'une trame (20 ms ou 16,6 ms suivant les pays). Le chronogramme des tâches 402 montre le partage temporel des différentes taches traitées par le processeur du micro-contrôleur.

Une extraction brute des données est réalisée par le circuit d'extraction brute 3 à partir du signal vidéo CVBS1. L'extraction brute consiste à démoduler les données de télétexte présentes sur le signal vidéo et à stocker un paquet de données dans une zone de la mémoire double port 2, la zone faisant fonction de mémoire tampon. Il est également possible d'utiliser une mémoire supplémentaire. Cette extraction s'effectue automatiquement par l'intermédiaire du deuxième bus 6 sans intervention du processeur 10 qui peut effectuer une autre tâche.

A la fin de l'extraction brute, une première interruption notée IT1, correspondant à l'interruption de début d'image, est produite. La première interruption IT1 déclenche, si elle est prioritaire par rapport à la tâche en cours, un premier traitement noté TX1 à TX5.

Le premier traitement TX1 à TX5 consiste à effectuer toutes les opérations qui nécessitent la présence du paquet de données dans la zone de mémoire tampon. Les opérations à réaliser sont le décodage de données (code correcteur d'erreur de type Hamming avec contrôle de parité supplémentaire), puis l'identification des données, et la mémorisation dans une zone utile de la mémoire de travail 2 si les données sont identifiées comme étant des données utiles. Le premier traitement se termine par la production d'une deuxième interruption IT2 de priorité inférieure à la première interruption IT1.

La deuxième interruption IT2 déclenche un deuxième traitement T'1 à T'5. Le deuxième traitement sert à réaliser toutes les opérations de télétexte qui sont basées sur les données utiles à savoir affichage de page et mise à jour des différentes tables de gestion du télétexte. Lorsque le deuxième traitement est terminé, le processeur peut reprendre une tâche de priorité inférieure au deuxième traitement, par exemple une tâche de gestion générale du téléviseur notée TV.

Avec un tel procédé de gestion du télétexte, si un deuxième traitement T'3 est particulièrement long, alors il peut être interrompu par une première interruption IT1 pour permettre la réalisation d'un nouveau premier traitement TX4. A l'issue du nouveau premier traitement TX4, le deuxième traitement T'3 reprend, la deuxième interruption IT2 produite par le nouveau premier traitement TX4 étant mise en attente. Le nouveau deuxième traitement T'4 commence après la fin du deuxième traitement T'3.

Dans la pratique, l'invention est particulièrement intéressante car des interruptions sont prioritaires par rapport au télétexte. Parmi les interruptions prioritaires, on peut citer les interruptions correspondant au clavier de commande, à la télécommande, et l'horloge interne du téléviseur. Or une action sur la télécommande peut se traduire par une succession d'interruptions très brèves qui rallongent considérablement: les premiers et deuxièmes traitements pendant un intervalle de temps qui peut être supérieur au temps de séparation entre deux trames.

D'une manière générale, on préférera que les première et deuxième interruptions IT1 et IT2 soient de priorités successives, la priorité de la deuxième interruption IT2 étant immédiatement inférieure à la priorité de la première interruption IT1. Afin de pouvoir assurer le meilleur fonctionnement possible, il convient que ces première et deuxième interruptions IT1 et IT2 aient une priorité supérieure par rapport à des tâches longues. Par tâches longues, il faut comprendre les tâches qui peuvent avoir une durée supérieure à 1 ms.

En ce qui concerne la deuxième interruption IT2, celle-ci peut être une interruption logicielle produite par le processeur 10. Cependant, il est possible que certains micro-contrôleurs ne permettent pas d'avoir une interruption logicielle de priorité supérieure à une interruption externe. Une variante consiste à émuler la deuxième interruption par exemple à l'aide d'un port de communication tel que le port 7 par exemple, le port de communication étant relié par l'extérieur du micro-contrôleur à l'une des entrées d'interruption NMI ET INT[7:0].

L'invention n'est pas limitée à la famille de micro-contrôleurs citée précédemment. Il va de soi que de très nombreuses variantes de l'invention sont possibles, les variantes étant dépendantes des différents types de micro-contrôleurs disponibles sur le marché auprès de différents constructeurs.

## Revendications

1. Procédé d'acquisition et d'affichage de données télétexte à partir d'un signal vidéo (CVBS1) reçu par un téléviseur qui comporte un processeur (10), dans lequel:
- le processeur (10) reçoit une première interruption (IT1) lorsque les données ont été extraites du signal vidéo et mémorisées dans une mémoire tampon (2);
- la première interruption (IT1) déclenche un premier traitement (TX1 à TX5) des données ayant pour objet de décoder, sélectionner et transférer lesdites données dans une mémoire utile (2),
**caractérisé en ce que** la fin du premier traitement (TX1 à TX5) produit une deuxième interruption (IT2) de priorité inférieure à la première interruption (IT1), la deuxième interruption (IT2) déclenchant un deuxième traitement (T'1 à T'5) ayant pour objet des opérations de télétexte basées sur lesdites données.

2. Procédé selon la revendication 1, **caractérisé en ce que** le deuxième traitement (T'1 à T'5) comprend des opérations d'affichage de page.

3. Procédé selon l'une des revendications 1 ou 2, **caractérisé en ce que** le deuxième traitement comprend des opérations de mise à jour des différentes tables de gestion du télétexte.

4. Procédé selon l'une des revendications 1 à 3, **caractérisé en ce que** la première interruption (IT1) a une priorité inférieure à des interruptions correspondant à des traitements d'une durée inférieure à 1 ms.

5. Procédé selon l'une des revendications 1 à 4, **caractérisé en ce que** les première et deuxième interruptions (IT1, IT2) sont de priorités consécutives.

6. Procédé de gestion d'un téléviseur comportant un micro-contrôleur, le micro-contrôleur comportant un processeur (10) et des périphériques (2, 3, 4, 5, 6, 7, 8) relatifs au fonctionnement global du téléviseur, procédé de gestion dans lequel le processeur (10) réalise la gestion de tous les périphériques du téléviseur, le procédé de gestion étant **caractérisé en ce qu'**il comporte le procédé d'acquisition et d'affichage selon l'une des revendications 1 à 5.

7. Téléviseur **caractérisé en ce qu'**il comporte un micro-contrôleur (1) qui réalise le procédé d'acquisition et d'affichage de l'une des revendications 1 à 5.

## Patentansprüche

1. Verfahren zum Erfassen und Darstellen von Teletext-Daten in einem Videosignal (CVBS1), das von einem Fernseher empfangen wird, der einen Prozessor (10) umfaßt, bei welchem:
- der Prozessor (10) einen ersten Interrupt (IT1) empfängt, wenn die Daten aus dem Videosignal extrahiert wurden und in einem Zwischenspeicher (2) abgelegt wurden,
- der erste Interrupt (IT1) eine erste Verarbeitung (TX1 bis TX5) von Daten zum Dekodieren, Auswählen und Übertragen der Daten in einen Arbeitsspeicher (2) auslöst,
**dadurch gekennzeichnet, daß**
am Ende der ersten Verarbeitung (TX1 bis TX5) ein zweiter Interrupt (IT2) mit niedrigerer Priorität als der erste Interrupt (IT1) ausgelöst wird, wobei der zweite Interrupt (IT2) eine zweite Verarbeitung (T'1 bis T'5) zum Durchführen von Teletext-Operationen in Abhängigkeit von den Daten auslöst.

2. Verfahren nach Anspruch 1, **dadurch gekennzeichnet, daß** die zweite Verarbeitung (T'1 bis T'5) Seitendarstellungsoperationen umfaßt.

3. Verfahren nach Anspruch 1 oder 2, **dadurch gekennzeichnet, daß** die zweite Verarbeitung Aktualisierungsoperationen verschiedener Tabellen für die Verwaltung des Teletextes umfaßt.

4. Verfahren nach einem der Ansprüche 1 bis 3, **dadurch gekennzeichnet, daß** der erste Interrupt (IT1) eine niedrigere Priorität als Interrupts hat, die Verarbeitungen von einer Dauer von weniger als 1 ms entsprechen.

5. Verfahren nach einem der Ansprüche 1 bis 4, **dadurch gekennzeichnet, daß** der erste und zweite Interrupt (IT1, IT2) aufeinanderfolgende Prioritäten haben.

6. Verfahren zum Steuern eines Fernsehers mit einem Mikro-Controller, wobei der Mikro-Controller einen Prozessor (10) und Peripherieeinheiten (2, 3, 4, 5, 6, 7, 8) für die allgemeine Funktion des Fernsehers umfaßt, wobei bei dem Steuerverfahren der Prozessor die Steuerung aller Peripherieeinheiten des Fernsehers durchführt und das Steuerverfahren **dadurch gekennzeichnet** ist, daß es das Verfahren zum Erfassen und zum Darstellen nach einem der Ansprüche 1 bis 5 umfaßt.

7. Fernseher, **dadurch gekennzeichnet, daß** er einen Mikro-Controller (1) umfaßt, der das Verfahren zum Erfassen und Darstellen nach einem der Ansprüche 1 bis 5 durchführt.

## Claims

1. A method of acquiring and displaying teletext data from a video signal (CVBS1) received by a television receiver that includes a processor (10), wherein:
- the processor (10) receives a first interruption (IT1) when the data have been extracted from the video signal and memorised in a buffer memory (2);
- the first interruption (IT1) begins a first processing step (TX1 to TX5) on the data, whereby to decode, select and transfer the said data into a working memory (2),
**characterised in that** the end of the first processing step (TX1 to TX5) produces a second interruption having lower priority than the first interruption (IT1), with the second interruption (IT2) beginning a second processing step (T'1 to T'5) for the purpose of performing teletext operations based on the said data.

2. A method according to Claim 1, **characterised in that** the second processing step (T'1 to T'5) comprises page displaying operations.

3. A method according to Claim 1 or Claim 2, **characterised in that** the second processing step comprises operations of revealing different tables of generation of the teletext.

4. A method according to one of Claims 1 to 3, **characterised in that** the first interruption (IT1) has a lower priority than interruptions corresponding to processing steps having a duration shorter than 1 ms.

5. A method according to one of Claims 1 to 4, **characterised in that** the first and second interruptions (IT1, IT2) have consecutive priorities.

6. A method of generation in a television receiver which includes a microcontroller, the microcontroller comprising a processor (10) and peripherals (2, 3, 4, 5, 6, 7, 8) relating to the general working of the television receiver, in which generation method the processor (10) generates all of the peripherals of the television receiver, the generation method being **characterised in that** it includes the method of acquisition and display according to one of Claims 1 to 5.

7. A television receiver, **characterised in that** it includes a microcontroller (1) which performs the method of acquisition and display according to one of Claims 1 to 5.
